# EUROPEAN PATENT APPLICATION

(11) **EP 0 867 735 A2**
(43) Date of publication of application: **30.09.1998**
(21) Application number: 98105198.0
(22) Date of filing: 23.03.1998
(51) Int. Cl.: G02B 6/12

(54) **Method for manufacturing of integrated optical components**

(30) Priority: 26.03.1997 CH 732/97
(71) Applicant: C.S.E.M. CENTRE SUISSE D'ELECTRONIQUE ET DE MICROTECHNIQUE SA, 2007 Neuchâtel (CH)
(72) Inventor: Kunz, Rino, 8162 Steinmaur (CH)
(74) Representative: Troesch Scheidegger Werner AG

(57) **Abstract**

The present invention is related to a method for manufacturing of integrated optical components, wherein the method comprises the steps that, in a first step, a pattern (M) is produced at least on parts of a substrate (S) using a piston (ST), that, in a second step, the pattern (M) produced on the substrate (S) is transferred at least partly into the substrate (S) and that, in a third step, at least one wave guide (WL) is laid on the substrate (S). The method according to the present invention is suitable for the mass fabrication of integrated optical components. Thereby, also hard and durable materials as substrates can be used with little expense.

## Description

The present invention is related to a method according to the pre-characterising part of claim 1 and to uses of said method.

Integrated optical components have been successfully applied in sensor technology not only because of substantial miniaturisation possibilities. In this connection reference is made to the European patent specification EP-0 538 425 B1.

For the manufacturing of integrated optical components - also referenced by IO components in the following - different methods are known. First of all, reference is made to the printed disclosures EP-0 226 604 and EP-0 533 074, whereas for the last mentioned disclosure a method for manufacturing of IO components is described, by which method the surface of a substrate is embossed using a pattern, before a wave guide is laid on the substrate. For this manufacturing method only such substrates may be used which are embossable at all. Consequently, the requirement of a good embossability has a substantial limitation on the materials used as substrate, whereas a lot of materials, which incorporate as such interesting characteristics as IO components, cannot be used.

In the paper "Grating Couplers in Tapered Wave Guides for Integrated Optical Sensing" (R. E. Kunz et al., Proceedings SPIE - The International Society for Optical Engineering, "Chemical Biochemical, and Environmental Fiber Sensors V", Volume 2068, September 7 to 9, 1993, pages 313 - 325) a method for manufacturing of IO components is described, for which method also hard and durable substrates have been used. The basis of such manufacturing methods is a method known under the term Photolithography, by which method the pattern desired to be on the substrate is produced in a thin photosensitive layer which is laid on the substrate. This method is extremely costly because each pattern must be generated first in the photosensitive layer.

Therefore, the object of the present invention is to provide a method which does not have the aforementioned drawbacks.

This object has been resolved by the measures given in the characterising part of claim 1.

Advantageous embodiments of the invention and two uses are given in further claims.

The method according to the present invention can particularly be used for the mass manufacturing of integrated optical components. Thereby, also hard and durable materials as substrate can be used, having to expect only little expenses. Of a particular advantage compared to the known manufacturing methods is that the selection of material for the substrate and for any intermediate layer laid on the substrate, wave guide layers and covering layers may take place completely independently. Therefore, the used materials may be optimised without taking into consideration the limitations given by the manufacturing method.

The present invention is further described referring to drawings showing an exemplified embodiment. Whereas it is shown in
- Fig. 1: single processing steps of an embodiment of the method according to the present invention and
- Fig. 2: a processing step which has been changed from the one shown in fig. 1, as further embodiment of the method according to the present invention.

In figs. 1A to 1D the processing steps are represented of a preferred embodiment of the method according to the present invention.

Thus, a substrate as is shown in fig. 1A, the surface of said substrate S is covered by a shapable layer F. This layer F is embossed using a piston ST in a first processing step - as indicated by the arrow R in fig. 1B. Thereby, a pattern M provided on the piston ST is transferred into the shapable layer F as shown in fig. 1B.

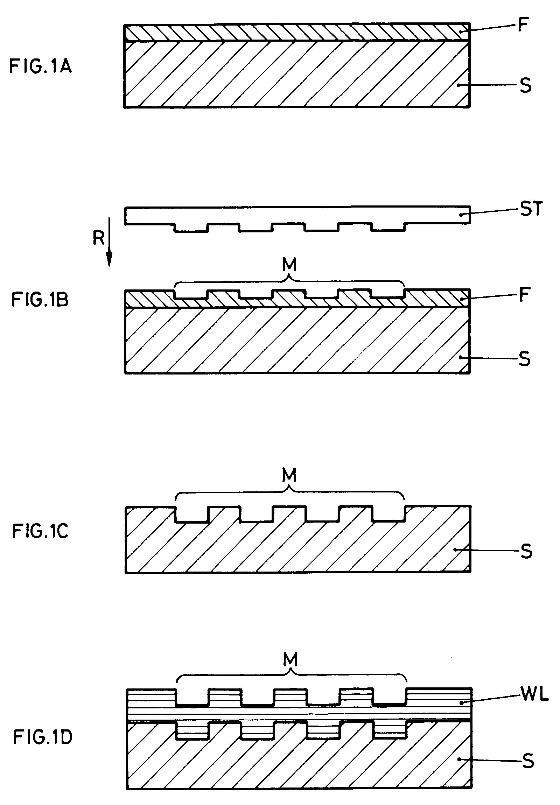

In the second processing step, the pattern M embossed into the shapable layer F is transferred into the substrate S, whereas, for a complete transfer by which the whole shapable layer F has been removed, a substrate S with pattern M is obtained according to fig. 1C. Such pattern transfers are known and have been e.g. described by R. E. Kunz et al. in "Grating Couplers in Tapered Wave Guides for Integrated Optical Sensing" (Proceedings SPIE - The International Society for Optical Engineering, Volume 2068, September 7, 1993, page 319) and so there is no need to go into further details.

Finally - in particular for a thin wave guide - a wave guide WL is laid on the substrate S in a third processing step, as is shown in fig. 1D, whereas, for an even application of the wave guide WL, the pattern is in turn formed on the surface of the wave guide, which surface is on the opposite side of the substrate, that is in particular important for IO components, as has been described in the paper of R. E. Kunz et al. having the title "Finite grating depth effects for integrated optical sensors with high sensitivity" (Biosensors and Bioelectronics, Vol. 11, No. 6/7, 1996, pages 653 - 667).

The method described along with figs. 1A to 1D is in particular advantageous if hard and durable materials for the substrate S or for the intermediate layer are used, whereas under the term intermediate layer a layer between the substrate and the wave guide is meant. For example, the following materials shall be mentioned:
- Polycarbonates with additives, e.g. to increase the thermal durability (e.g. Pokalon, type F48 of the company Lonza);
- Polyester, PVC, Polyimide, Polysulfon and Polyethersulfon;
- Columbia Resin CR 39 of the company ESSILOR, Paris;
- quartz;
- compact and/or evaporated glass;
- semi-conductors (in particular silicon and III-V materials with or without intermediate layers (for example SiO₂));

This enumeration is - as indicated - not complete. Consequently, also materials may be used in the method according to the present invention, which materials are similar to the above mentioned. For example it is conceivable that for IO components, for which a light source is arranged in an integrated circuit, a material as substrate may be used that comprises as further characteristic the ability to emit light. Examples for such inorganic materials are the above mentioned semiconductors, examples of such organic materials are special polymers, as PPV (poly(p-phenylenevinylene)), which must be properly doped and which are either not directly embossable or which will be damaged by a direct embossing.

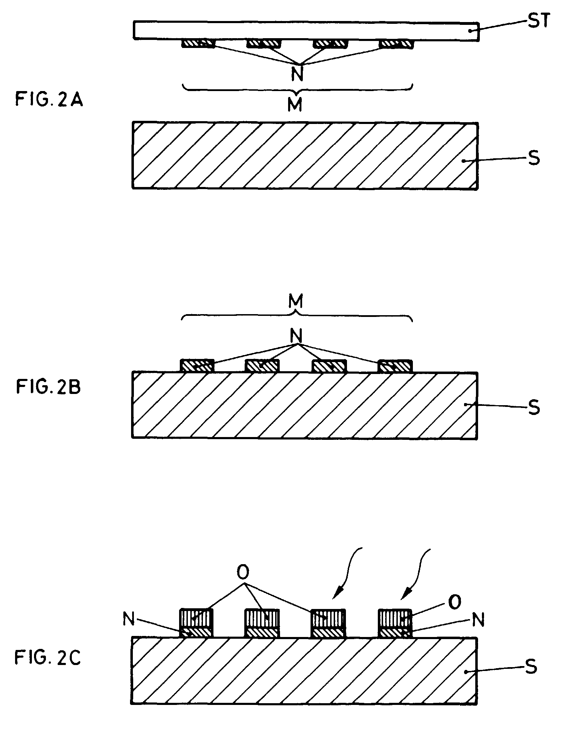

A further embodiment of the method according to the invention is represented in figs. 2A and 2B and consists in that - instead of using a shapable layer F in which the pattern M is embossed - the pattern M is produced on the piston ST according to fig. 1A, which may be done e.g. by depositing a suitable substance N at predefined positions on the substrate S according to the desired pattern M. Thereby, the application of two methods is basically conceivable: In a first method, the substance N, which is transferred onto the substrate S by means of the piston ST, is used to transfer the imaged pattern directly into the substrate S according to the afore-mentioned explanations in connection with fig. 1B. In a second method, the pattern M laid on the substrate S or the molecules of the substance N which has been laid on the substrate as by the piston ST, are - in a further processing step according to fig. 2C - covered by a further substance O before the transferring into the substance S. The molecules of the further substance O are thereby preferably immobilised under substance N using the photolinking processing. Thereby, the pattern M is reinforced on the subtrate S before the transferring is done, which is in particular advantageous and partly also necessary for hard substrates S to obtain the desired structure in the substrate S. The photolinking processing has been comprehensively described by Sigrist et al. in "Surface Immobilization of biomolecules by light" (Optical Engineering, August 1995, Vol. 34, No. 8, pages 2339 ff.).

A further method comprises the building up of one or several monolayers O, preferably using the known Langmuir-Blodgett technique ("Immunological activity of IgG Langmuir films oriented by protein A sublayer", T. Dubrovsky et al al., Sensors and Actuators B 23, 1995, pages 1 - 7) or by using Self-Assembled Monolayers (SAM) ("Microfabrication by Microcontact Printing of Self-Assembled Monolayers", James L. Wilbur et al., Advanced Materials, 1994, No. 7/8, pages 600 - 604).

It has been shown that as substances N the following are in particular suitable: (photolink)-polymers, alkanethiols or metals.

As substances O the following materials are suitable in particular: Cadmium-Arachidate, fatty acids, proteins or biomolecules.

At the time of transferring the patterns into the substrates, so-called deformations are produced in a further embodiment of the method according to the present invention, through which the number of the possible structures in the substrate is substantially increased. A method for the deformation is known under the term "Blazing" and has been described e.g. in the paper "New Vistas for Diffraction Gratings" (Electro Optics, May 1983). Thereby, the deformation is produced by anisotropic corroding under an acute angle into the substrate S.

It has been already pointed out that a semi-conductor can be used as substrate. In particular, it is conceivable that electronic and/or opto-electronic circuits are provided on the substrate. In this connection, reference is made to the European patent specification EP-0 538 425.

In a further embodiment of the method according to the invention, the wave guides are produced by several layers in the third processing step. Such wave guides consisting of several layers can comprise shapable or stiff characteristics, i.e. as the wave guides which are produced conventionally.

The use of heat-durable materials for substrates makes it possible to produce wave guides also at high temperatures on the respective substrate. The temperature selected preferably is thereby higher than 200°C. Through that the number of materials which can be used as wave guides increases substantially. It has been shown that the following materials are suitable in particular: glass (e.g. deposited through coating at vacuum, Sol-Gel layers, polymers, Al₂O₃, Ta₂O₅, TiO₂, Nb₂O₅, Si₃N₄, SiNₓ, HfO₂, ZrO₂ (Kunz et al., "Integrated Optical Sensors Based on Reactive Low-Voltage Ion-plated Films", Sensors and Actuators A, 25-27, 1991, pages 155 - 159).

A further characteristic desired for many applications is the independence of the IO components of environmental conditions, as e.g. the temperature (so-called athermal characteristics - reference is made to Luca G. Baraldi, dissertation Federal Institute of Technology Zürich No. 10762, 1994, pages 63 - 67), the pressure and the humidity. Of these "outside" influences, the temperature is the most important variable, which must be compensated often. This is achieved by using different materials for the IO components at the same time. The manufacturing method according to the present invention allows to use combinations of material for the substrate, the intermediate layers, the wave guide layers, the sensor layers and covering layers, whereas the layer build-up is selected in such a way that athermal or other insensitive IO components can be realised.

In a further embodiment of the method according to the invention it has been finally proposed to lay a further layer onto the wave guide WL and - if necessary - onto this further layer an additional wave guide. Thereby, it is possible through this method to realise structures which have been described in EP-0 538 425 also. Therefore, the method according to the invention may also be used to manufacture integrated circuits, in particular which comprise several sensor fields on the same chip. The following variables may be measured for example: dispersion, fluorescence, temperature, pressure, electric and magnetic field, optic index and absorption. Reference is made herewith to EP-0 538 425.

It is pointed out that the IO components manufactured according to the method of the present invention may not only be used in sensor technology, but also in optical communication networks.

## Claims

1. Method for manufacturing of integrated optical components, whereas the method comprises the steps
- that, in a first step, a pattern (M) using a piston (ST) is produced at least on parts of a substrate (S),
- that, in a second step, the pattern (M) produced on substrate (S) is transferred at least partly into the substrate (S), and
- that, in a third step, at least one wave guide (WL) is laid on the substrate (S).

2. Method according to claim 1, characterised in that a shapable layer (F) is laid on the substrate (S) in the first processing step, in which layer (F) the pattern (M) is embossed using the piston (ST).

3. Method according to claim 2, characterised in that the shapable layer (F) is finally completely removed from the substrate (S).

4. Method according to claim 1, characterised in that, in the first processing step, a substance (N) is laid on the piston (ST), according to the desired pattern (M), and that the substance (N) adheres to the substrate (S) by impressing the piston on substrate and/or the substance (N) changes the characteristics of the surface of the substrate in a chemical or physical manner.

5. Method according to claim 4, characterised in that molecules of a further substance (O) are immobilised on the surface of the substance (N), preferably using a photolinking method.

6. Method according to any of the previous claims, characterised in that, in the second processing step, a deformation of the structure produced in the substrate as according to the pattern (M) is produced.

7. Method according to any of the previous claims, characterised in that hard and durable materials are used for the substrate (S).

8. Method according to any of the previous claims, characterised in that one or several of the following materials are used as substrate (S):
- semi-conductors with/without comprised opto-electronic and/or electronic circuit;
- integrated circuits using Silizium or III-V materials with or without intermediate layers;
- polymers, in particular PPV (poly(p-phenylenevinylene));
- glass.

9. Method according to any of the previous claims, characterised in that the wave guide or the wave guides (WL), respectively, preferably comprise several layers and/or are not shapable.

10. Method according to any of the previous claims, characterised in that the wave guides (WL) are laid on the substrate (S) under high temperatures, preferably higher than 200°C.

11. Method according to any of the previous claims, characterised in that, before the second or third processing step, an intermediate layer, preferably an oxide layer, is laid on the substrate (S).

12. Method according to any of the previous claims, characterised in that the materials are selected such that athermal characteristics result for the integrated optical components.

13. Use of the method according to any of the claims 1 to 12 for the manufacturing of chemical sensors and/or immunosensors.

14. Use of the method according to any of the claims 1 to 12 for manufacturing of IO components with several sensor fields on a single chip, particularly to measure scattering, fluorescence, temperature, pressure, electric field, magnetic field, optic index and/or absorption.

15. Use of the method according to any of the claims 1 to 12 for manufacturing of IO components for communication networks.
